# EUROPÄISCHE PATENTSCHRIFT

(11) **EP 2 283 991 B1**
(45) Veröffentlichungstag und Bekanntmachung des Hinweises auf die Patenterteilung: **22.07.2020**
(21) Anmeldenummer: 10171847.6
(22) Anmeldetag: 04.08.2010
(51) Int. Cl.: B29C 49/42, B08B 9/00, B29C 33/72, B29C 49/36, B29C 49/12, B29C 49/46, B29C 49/48, B08B 9/08

(54) **Blasformmaschine mit Reinigungssystem**
Blow-moulding machine with cleaning system
Machine de formage par soufflage dotée d'un système de nettoyage

(30) Priorität: 11.08.2009 DE 102009036922
(43) Veröffentlichungstag der Anmeldung: 16.02.2011
(73) Patentinhaber: Krones AG, 93073 Neutraubling (DE)
(72) Erfinder: Winzinger, Frank, 93073 Neutraubling (DE); Lappe, Ulrich, 93073 Neutraubling (DE)
(74) Vertreter: Bittner, Bernhard

(56) Entgegenhaltungen:
- EP-A1- 1 186 399
- DE-A1- 3 515 255
- DE-A1- 10 064 167
- DE-T2- 69 126 877
- DE-U1- 20 308 513
- DE-U1- 29 720 311
- DE-U1-202008 005 257
- US-A- 3 650 678
- US-B1- 6 984 360
- US-B2- 6 808 379

## Beschreibung

Die vorliegende Erfindung bezieht sich auf Vorrichtungen zum Umformen von Kunststoffvorformlingen zu Kunststoffbehältnissen und insbesondere auf Blasformmaschinen. Derartige Blasformmaschinen sind aus dem Stand der Technik seit längerem bekannt. Sie weisen üblicherweise eine Blasform auf, innerhalb derer die Kunststoffvorformlinge durch Druckbeaufschlagung zu Kunststoffbehältnissen expandiert werden. Bei diesem Streckblasvorgang von Kunststoffbehältern scheiden sich sogenannte Oligomere d. h. kurzkettige Moleküle oder Fremdstoffe aus dem Kunststoff der Kunststoffvorformlinge auf der Blasform ab. Die Oberfläche dieser Blasformen wird daher mit zunehmender Verschmutzung stumpf und im Extremfall rau. Dies hat jedoch negative Auswirkungen auf die Flaschenqualität, da dies dazu führen kann, dass die Flaschenoptik wegen der stumpfen Blasformen trübe werden kann oder auch die Kühlung an der Formoberfläche in Folge der Rauhigkeit reduziert ist.

Da beides nicht akzeptabel ist, müssen die Blasformen in regelmäßigen Intervallen gereinigt und in der Regel poliert werden. Besonders hohe Verschmutzungen von Oligomeren treten auf, wenn prozessbedingt (z. B. bei Hotfillverfahren) mit hohen Formtemperaturen gearbeitet werden muss, da die Verschmutzung mit heißen Formen um ein mehrfaches beschleunigt wird und die Reinigung der Formen im heißen Zustand nur mit Sicherheitsrisiko aufgrund der Verbrennungsgefahr durchgeführt werden kann. Insbesondere bei einer sogenannten Hotfilling- (Heißbefüllungs) Anlage mit einem Blasmaschinen und Füllerblock ist diese Formenreinigung oftmals ein sehr negativer Aspekt. Ein weiterer Aspekt für die Reinigung von Blasformen, auch bei sogenannten kalten Formen (z. Bsp. kleiner 100°C), ist die Hygiene.

Gerade in der Abfüllung sensibler Produkte ist es wichtig, eine Verschleppung von Keimen oder Sporen an der Außenwand der Flasche in den Füllerbereich möglichst zu vermeiden. Hierzu trägt auch eine regelmäßige und gute Reinigung der Blasformen bei. Somit wird unter Reinigung auch immer eine Reduktion von Keimen und Sporen verstanden.

Aus der WO 2008 125216 A2 ist eine Behälterherstellungsvorrichtung und ein Herstellungsverfahren für Formkörper bekannt. Dabei ist eine Strahlungseinrichtung an oder auf der Blasformmaschine angeordnet wobei die Strahlung wenigstens auf einen Bereich der Blasformmaschine gerichtet ist.

DE10064167A1 offenbart eine Vorrichtung zum Umformen von Kunststoffvorformlingen zu Behältnissen, mit Blasformen, wobei jede Blasform einen Hohlraum ausbildet, innerhalb dessen die Kunststoffvorformlinge zu Behältnissen umformbar sind, mit einem Druckbeaufschlagungseinrichtung, um die Kunststoffvorformlinge mit einem Medium zu beaufschlagen, um diese gegen eine den Hohlraum begrenzende Innenwandung der jeweiligen Blasform zu expandieren, mit einer Reckstange, um die Kunststoffvorformlinge in deren Längsrichtung zu dehnen, wobei die Vorrichtung eine Reinigungseinrichtung aufweist, um Bereiche der jeweiligen Blasform zu reinigen, wobei die Reinigungseinrichtung wenigstens eine Austrittsöffnung für ein Reinigungsmedium zum Reinigen der jeweiligen Blasform aufweist und diese Austrittsöffnung wenigstens zeitweise innerhalb der jeweiligen Blasform angeordnet ist.

Der vorliegenden Erfindung liegt daher die Aufgabe zugrunde, die Reinigung derartiger Blasformmaschinen zu vereinfachen. Der Erfindung liegt weiterhin die Aufgabe zugrunde, ein automatisiertes Verfahren zur Blasformreinigung zur Verfügung zu stellen. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Behältnissen ist in dem Anspruch 1 definiert.

Durch diese Vorgehensweise ist eine Reinigung der Blasform insbesondere im laufenden Betrieb möglich, ohne dass hierzu der Betrieb der Vorrichtung für längere Zeit eingestellt werden muss. So ist es möglich, die Blasform in regelmäßigen Abständen mit dem Reinigungsmedium zu beaufschlagen. Weiterhin erlaubt die Anordnung dieser Austrittsöffnung auch eine Reinigung der Blasform in einem geschlossenen Zustand.

Damit ist vorteilhaft die Blasform auch von einem geschlossenen in einen geöffneten Zustand überführbar.

Vorteilhaft ist die Reckstange gegenüber den Kunststoffvorformlingen bzw. deren Gewinden in der Längsrichtung der Kunststoffvorformlinge bewegbar.

Bei der Druckbeaufschlagungseinrichtung handelt es sich vorteilhaft um eine Blasdüse, welche die Behältnisse über deren Mündung mit dem gasförmigen Medium und insbesondere mit Luft beaufschlagt.

Es wird damit zur Kompensation der oben genannten Nachteile vorgeschlagen, den Einsatz eines automatischen Reinigungsvorgangs vorzusehen. Damit ist die Reinigungseinrichtung bevorzugt in der Lage, die Reinigung der Behältnisse automatisiert durchzuführen. Es ist auch möglich, die Reinigungseinrichtung bei bereits bestehenden Maschinen nachzurüsten. Weiterhin kann durch die vorgeschlagene Vorgehensweise die Blasform bzw. der gesamte Formträger bei der Sterilisation geschlossen gehalten werden und es wird so nicht riskiert, dass die ganze Blasmaschine einschließlich deren befetteten Kurvenlagerungen mit dem Sterilisationsmedium beaufschlagt wird. Auf diese Weise können mögliche Korrosionsschäden vermieden werden.

Vorteilhaft weist die Vorrichtung ein Reservoir für das Sterilisationsmedium und eine Drehverteilung auf. Auch wäre es möglich, an jeder Blasstation ein eigenes Reservoir für das Sterilisationsmedium vorzusehen, welches zyklisch aufgefüllt werden kann.

Als Reinigungsmittel sind solche Substanzen geeignet, die zur Außen- und Innenreinigung (Cip-Reinigung) von Maschinen und Anlagen in getränkeabfüllenden Betrieben verwendet werden können. Beispiel für derartige Reinigungsmittel sind Natronlauge (NaOH), saure Reinigungsmittel auf Basis von Phosphorsäure, saure Reinigungsmittel auf Basis von Salpetersäure, Desinfektionsmittel auf Basis von Essigsäure, Ozon, Wasserstoffperoxyd, chloralkalische Reinigungsmittel, Heißwasser oder Dampf. Daneben könnte als Reinigungsmittel auch Chlordioxyd in Betracht kommen.

Bei einer bevorzugten Ausführungsform ist die Austrittsöffnung als Düse für das Reinigungsmedium ausgebildet. Auch wäre es möglich, dass mehrere Düsen vorgesehen sind, so dass größere Bereiche der Innenwandung oder auch die komplette Innenwandung besprüht oder anderweitig benetzt werden können.

Bei einer weiteren vorteilhaften Ausführungsform weist die Blasform zwei auseinanderschwenkbare Seitenteile auf, die in einem geschlossenen Zustand in ihrem Inneren den Hohlraum ausbilden. Im Betrieb wird in einem auseinander geklappten Zustand in der Formhälfte ein Vorformling in die Blasform eingelegt, anschließend werden die Formhälften geschlossen und schließlich der Kunststoffvorformling zu dem Behältnis expandiert.

Bei einer weiteren vorteilhaften Ausführungsform weist die Blasform ein Bodenteil auf. Dieses Bodenteil ist dabei vorteilhaft separat zu den Seitenteilen ausgebildet und verschließt die Blasform nach unten hin.

Bei einer vorteilhaften Ausführungsform ist wenigstens eine Austrittsöffnung in einem Bodenteil der Blasform angeordnet. Auf diese Weise ist es möglich, dass das Reinigungsmedium über die Reckstange eingebracht werden kann, über das Bodenteil der Blasform oder aber die Druckbeaufschlagungseinrichtung wie beispielsweise die Blasdüse.

Es wäre jedoch auch möglich, dass mehrere Austrittsöffnungen bzw. Düsen in der Bodenform angeordnet sind bzw. auch mehrere Austrittsöffnungen in der Reckstange der Druckbeaufschlagungseinrichtung. Auch könnten sowohl im Bodenteil als auch in den Reckstangen oder auch sowohl in der Reckstange als auch in der Druckbeaufschlagungseinrichtung oder auch sowohl dem Bodenteil als auch der Druckbeaufschlagungseinrichtung Austrittsöffnungen vorgesehen sein.

Bei einer weiteren vorteilhaften Ausführungsform weist die Reckstange einen in eine Richtung eines Bodens der Behältnisse weisenden einen Endabschnitt auf und die Austrittsöffnung ist in diesem Endabschnitt angeordnet. Bei diesem Endabschnitt handelt es sich um denjenigen Abschnitt der Reckstange, der während des Reckens bis an den Boden der Kunststoffvorformlinge heranragt.

Bei einer weiteren vorteilhaften Ausführungsform weist die Reckstange mehrere in Umfangseinrichtung verteilte, insbesondere gleichmäßig verteilte, Austrittsöffnungen auf. Vorteilhaft sind diese Öffnungen schräg ausgerichtet, so dass das Medium schräg aus diesen Öffnungen heraustritt. Auf diese Weise ist es möglich, die vollständige Wandung der Blasform in Umfangsrichtung mit dem Reinigungsmedium zu beaufschlagen. Auch wäre es möglich, die Reckstange zum Reinigungsbetrieb drehbar auszuführen.

Bei einer weiteren vorteilhaften Ausführungsform ist die Austrittsöffnung in einem zentralen Bereich eines Bodenteils der Blasform angeordnet. Dabei kann beispielsweise das Bodenteil eine Erhöhung in diesem zentralen Bereich aufweisen, wobei in diesem zentralen Bereich vorteilhaft während des Blasvorgangs auch ein sogenannter Anspritzpunkt der Behältnisse liegt.

Bei einer weiteren vorteilhaften Ausführungsform weist die Blasform Abführöffnungen zum Abführen des Reinigungsmediums auf. Dabei ist es möglich, dass in einem geschlossenen Zustand der Blasform das Reinigungsmittel auf die Innenwandung der Blasform aufgebracht und anschließend über die besagten Abführöffnungen abgeführt wird.

Vorteilhaft sind die Abführöffnungen in einem Bodenteil der Blasform vorgesehen. Auf diese Weise ist es möglich, dass sich nach dem Reinigungsvorgang die Reinigungsflüssigkeit in dem Bodenbereich sammelt und über die besagten Öffnungen, die bevorzugt in tiefen Bereichen des Bodenteils angeordnet sind, abgeführt wird.

In einer weiteren vorteilhaften Ausführungsform ist die Blasform beweglich angeordnet. Dabei ist die Blasform bevorzugt neben weiteren Blasformen an einem Trägerrad angeordnet.

Die vorliegende Erfindung ist weiterhin auf eine Anordnung gemäß Anspruch 11 zum Umformen von Kunststoffvorformlingen zu Kunststoffbehältnissen und insbesondere Getränkebehältnissen gerichtet, wobei diese Anordnung eine Vielzahl von Vorrichtungen gemäß Anspruch 1 aufweist und wobei diese Vorrichtungen an einer gemeinsamen Transporteinrichtung angeordnet sind.

Vorteilhaft handelt es sich bei der Anordnung um eine Rundläuferanordnung wobei der Transport der Vorrichtungen kontinuierlich oder auch getaktet erfolgen kann.

Die vorliegende Erfindung ist weiterhin auf ein Verfahren zum Umformen von Kunststoffvorformlingen zu Kunststoffbehältnissen gemäß Anspruch 12 gerichtet.

Bei einem bevorzugten Verfahren wird das Reinigungsmedium durch einen Bodenbereich der Blasform, durch die Reckstange und/oder eine Blasdüse in den Hohlraum eingebracht.

Weitere Vorteile und Ausführungsformen ergeben sich aus den beigefügten Zeichnungen. Darin zeigen:
- Fig. 1: Eine Vorrichtung in einer perspektivischen Darstellung;
- Fig. 2: eine Detaildarstellung der in Fig. 1 gezeigten Vorrichtung;
- Fig. 3: eine weitere Detaildarstellung der in Fig. 1 gezeigten Vorrichtung;
- Fig. 4: eine Detaildarstellung der Blasform einer Vorrichtung;
- Fig. 5: eine weitere Detaildarstellung der Blasform der Vorrichtung;
- Fig. 6: eine Darstellung einer Reckstange;
- Fig. 7: eine Schnittdarstellung der Reckstange aus Fig. 6;
- Fig. 8: eine weitere Schnittdarstellung der Reckstange aus Fig. 6;
- Fig. 9: eine schematische Darstellung einer Blasformanordnung;
- Fig. 10: eine perspektivische Darstellung eines Bodenteils;
- Fig. 11: eine Schnittdarstellung des Bodenteils aus Fig. 10;
- Fig. 12.: eine Draufsicht von unten auf das Bodenteil;
- Fig. 13: eine Seitenansicht des Bodenteils;
- Fig. 14: eine Darstellung einer in einem Reinraum angeordneten Blasform einer erfindungsgemäßen Vorrichtung
- Fig. 15: eine Darstellung zur Veranschaulichung einer Reinigung der Blasdüse über die Reckstange;
- Fig. 16a,b: zwei Darstellungen einer weiteren Ausführungsform der vorliegenden Offenbarung;
- Fig. 17a,b: zwei Darstellungen einer weiteren Ausführungsform der vorliegenden Offenbarung, und;
- Fig. 18: eine weitere Darstellung zur Veranschaulichung der in den Fig 17a,b gezeigten Ausführungsformen.

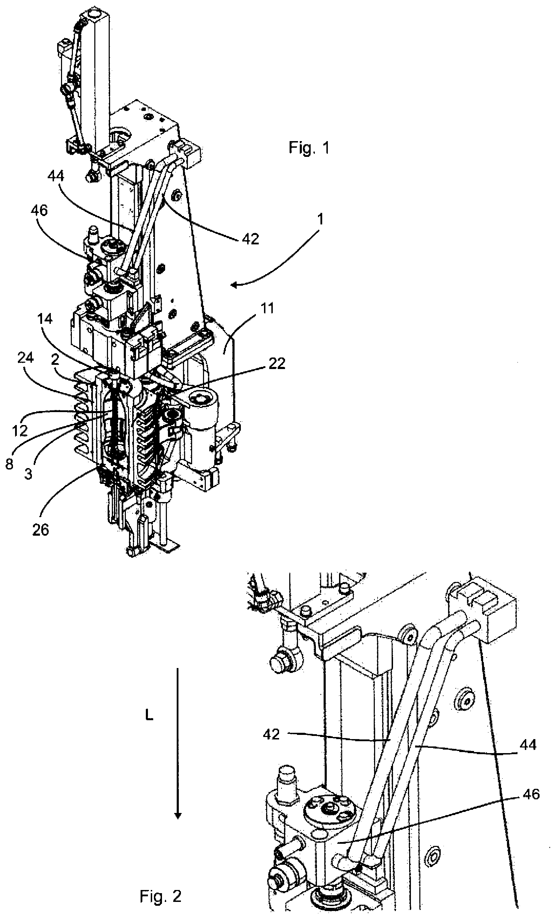

Fig. 1 zeigt eine Vorrichtung zum Umformen von Kunststoffvorformlingen (nicht gezeigt) in Kunststoffbehältnisse (nicht gezeigt). Diese Vorrichtung weist dabei einen Hauptträger 11 auf, an dem eine Blasform 2 in einem Blasformträger 3 (jeweils nur teilweise dargestellt) angeordnet ist.

Innerhalb der Blasform 2 wird ein Hohlraum 4 ausgebildet, innerhalb dessen die Kunststoffvorformlinge zu Kunststoffbehältnissen durch Beaufschlagung mit Druckluft expandiert werden. Weiterhin weist die Vorrichtung eine Reckstange 12 auf, die hier in der Längsrichtung L beweglich ist, um die Kunststoffvorformlinge zu dehnen. Das Bezugszeichen 22 bezieht sich auf eine erste Blasformhälfte und das Bezugszeichen 24 bezieht sich auf eine zweite Blasformhälfte. Daneben weist die Blasform noch einen Boden 26 bzw. ein Bodenteil auf, der im Betrieb den Hohlraum 4 nach unten hin abschließt. Das Bezugszeichen 14 bezieht sich auf ein Druckbeaufschlagungseinrichtung bzw. Blasdüse, welche die Kunststoffvorformlinge mit Druckluft beaufschlagt.

Über Zuführleitungen 42, 44 können bei der in Fig. 1 gezeigten Ausführungsform Reinigungsmedien zugeführt werden. Zu diesem Zweck weist die Vorrichtung auch einen Ventilblock 46 auf, der die Zuführung der Reinigungsmedien steuert. Auch wäre es möglich, dass über eine Zuführleitung ein Reinigungsmedium und über eine andere Zuführleitung ein Spülmedium wie beispielsweise Wasser zugeführt wird Fig. 2 zeigt eine Detaildarstellung der in Fig. 1 gezeigten Vorrichtung. Dabei sind insbesondere auch die Zuführleitungen 42, 44 vorgesehen, welche hier flexibel ausgeführt sind, damit sie trotz einer Bewegung des Ventilblocks 46 in der Längsrichtung die Verbindung beibehalten können.

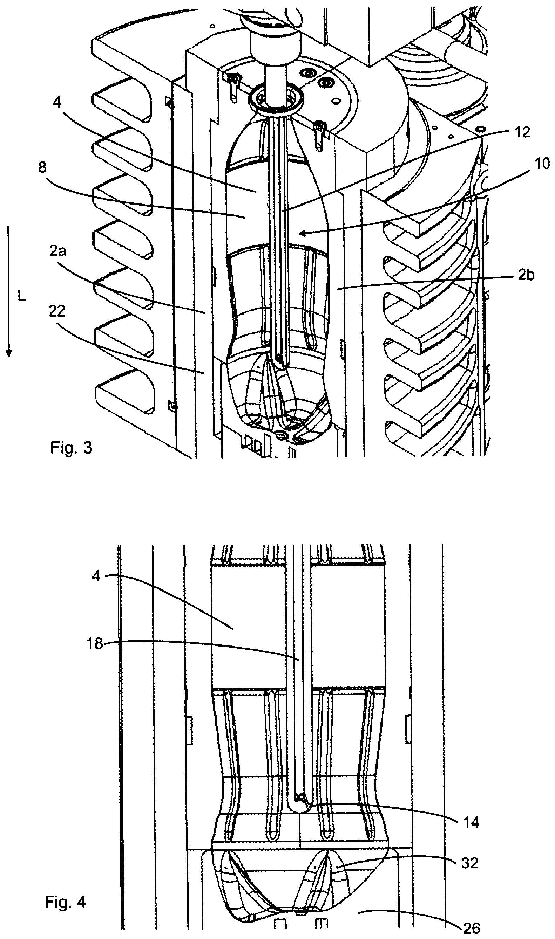

Fig. 3 zeigt eine weitere Darstellung einer Blasform 2. Auch die Reckstange 12 ist hier in einer geschnittenen Darstellung gezeigt. Über diese Reckstange 12 wird bei dieser Ausführungsform das Reinigungsmedium in die Blasform 2 bzw. der Hohlraum 4 eingeführt. Dabei kann in einem speziellen Reinigungsgang die Reckstange 12 in der Längsrichtung L bewegt werden und während dieser Zeit das Reinigungsmedium die Innenwandung 8 der Blasform beaufschlagen. Das Bezugszeichen 10 bezieht sich auf die Reinigungseinrichtung in ihrer Gesamtheit.

Fig. 4 zeigt eine weitere Darstellung der Blasform. Man erkennt, dass in der Reckstange 12 ein Kanal 18 angeordnet ist sowie eine Austrittsöffnung 14, durch welche das Medium aus der Reckstange 12 austreten kann. Das Bezugszeichen 32 bezieht sich hier auf eine weitere Öffnung, die im Bodenteil 26 angeordnet ist. Daneben können im Bodenteil 26 weitere Öffnungen vorgesehen sein, welche als Abläufe dienen.

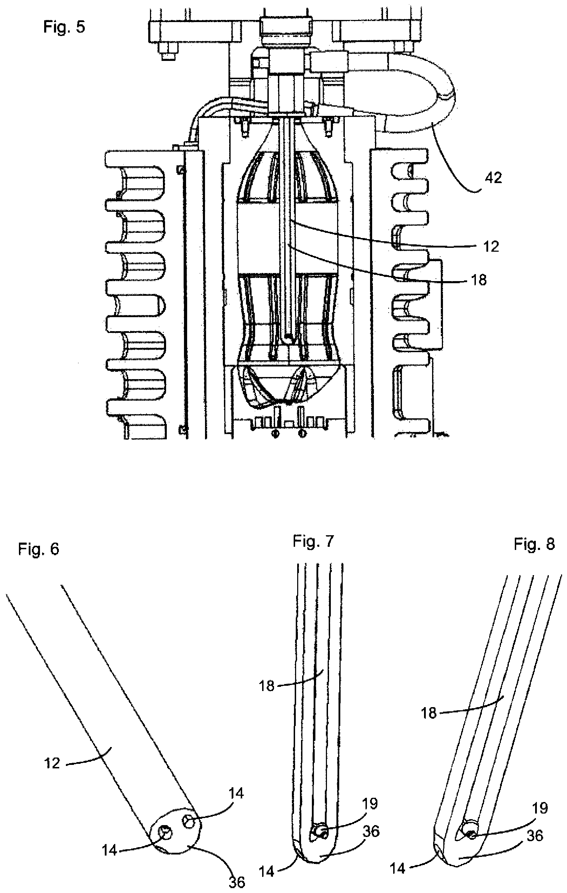

Fig. 5 zeigt eine weitere Darstellung der Blasform. Auch hier ist die Zuführleitung 42 erkennbar, die hier in einer gekrümmten Position ist, da die Reckstange 12 maximal in die Blasform 2 eingefahren ist.

Fig. 6 zeigt eine perspektivische Darstellung einer Reckstange 12. Diese Reckstange 12 weist hier mehrere Austrittsöffnungen 14 auf, durch welche das Reinigungsmedium aus der Reckstange austreten kann. Diese Öffnungen sind hier in einem Endabschnitt 36 ausgebildet, der hier eine kugelförmige Gestalt aufweist. Weiterhin sind die Austrittsöffnungen jeweils schräg angeordnet, damit das Reinigungsmedium aus diesen schräg austreten kann.

Fig. 7 zeigt eine teilgeschnittene Darstellung der Reckstange 12. Auch hier ist der Kanal 18 erkennbar, sowie die Teilkanäle 19, die den Kanal 18 mit den Austrittsöffnungen 14 verbinden. Weiterhin wäre es möglich, Austrittsöffnungen auch in weiteren Bereichen der Reckstange 12 vorzustehen. Daneben könnte der Kanal auch so ausgestaltet sein, beispielsweise von oben nach unten verjüngend, dass auch bei weiteren angeordneten Öffnungen das Reinigungsmedium jeweils mit dem gleichen Druck aus der Reckstange 12 austritt.

Fig. 8 zeigt eine weitere Darstellung einer Reckstange. Auch hier sind der Endabschnitt 36 sowie die Austrittsöffnung 14 zu erkennen.

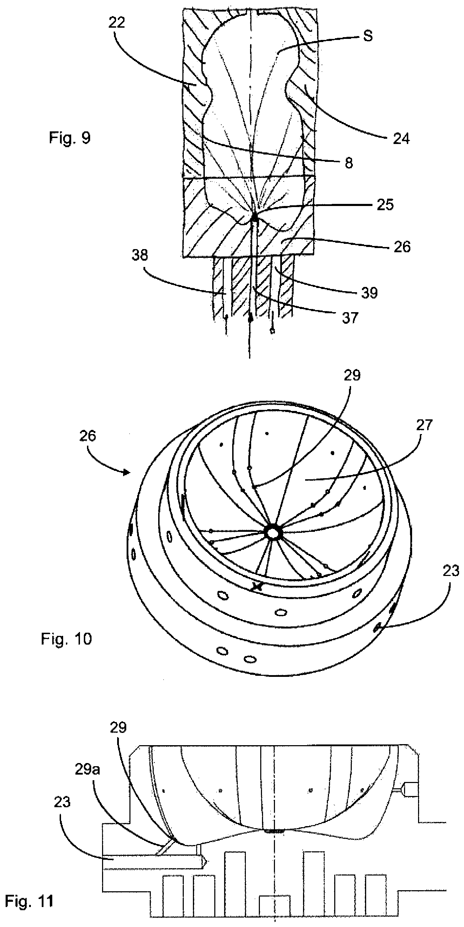

Fig. 9 zeigt eine weitere schematische Darstellung einer Blasform mit den beiden Blasformhälften 22 und 24. Das Bezugszeichen S bezieht sich auf Strahlrichtungen, unter denen die Reinigungsflüssigkeit auf die Innenwandung 8 der Blasform trifft. Eine entsprechende Austrittsöffnung bzw. Reinigungsdüse ist hier mit dem Bezugszeichen 25 gekennzeichnet. Das Bezugszeichen 37 kennzeichnet einen Kanal, über den das Reinigungsmedium zugeführt wird und die Bezugszeichen 38 und 39 Vorläufe bzw. Rückläufe für ein Temperiermedium für das Bodenteil 26.

Fig. 10 zeigt eine perspektivische Darstellung eines Bodenteils 26. Man erkennt hier Öffnungen 29, die in einer Wandung 27 des Bodenteils angeordnet sind. Diese Öffnungen dienen zum Abführen des Reinigungsmediums und sind bevorzugt in einem vergleichsweise tiefliegenden Bereich des Bodenteils 26 angeordnet. Das Bezugszeichen 23 bezieht sich auf Kanäle, über welche die Reinigungsflüssigkeit abgeführt wird.

Fig. 11 zeigt eine Schnittdarstellung des Bodenteils aus Fig. 10. Man erkennt hier wiederum Kanal 23 zum Abführen des Reinigungsmediums. Weiterhin erkennt man, dass sich ausgehend von der Öffnung 29 ein Zuführkanal 29a in Richtung des Kanals 23 erstreckt. Auf diese Weise ist es möglich, von einer Vielzahl von Öffnungen 29 das Reinigungsmedium abzuführen.

Es wäre auch möglich, während eines Reinigungsbetriebs ein Reinigungsmittel durch das Bodenteil 26 einzuleiten. Aus der DE 200 23 423 U1 ist eine Vorrichtung bekannt, bei der die Blasform mindestens einen Einlass für ein Beschichtungsmittel aufweist. Der Gegenstand dieser Offenbarung wird hiermit durch Bezugnahme vollumfänglich auch zum Gegenstand der vorliegenden Anmeldung gemacht. Während jedoch im Fall der DE 200 23 423 U1 vorgeschlagen wurde, ein Beschichtungsmittel zuzuführen, wird nunmehr vorgeschlagen, ein Reinigungsmittel zuzuführen.

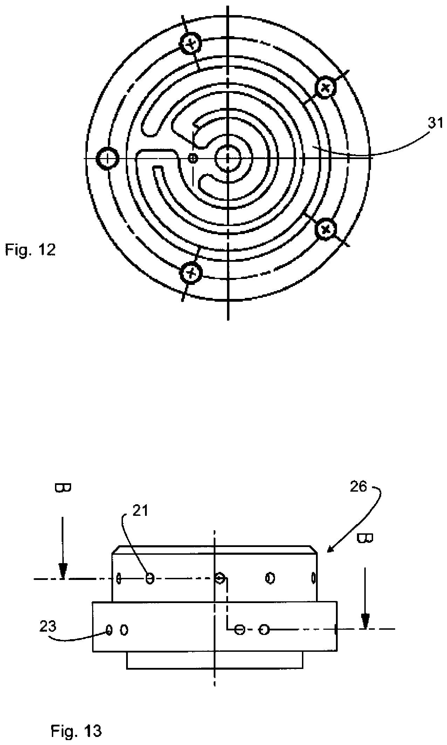

Fig. 12 zeigt eine Draufsicht von unten auf eine Bodenform. Hier ist insbesondere ein Labyrinthbereich vorgesehen, der zu Heizungszwecken dient.

Fig. 13 zeigt eine weitere Seitenansicht des Bodenteils 26. Man erkennt hier neben den Kanälen 23 auch noch höherliegende Kanäle 21, welche ebenfalls zur Abführung von Reinigungsmedien dienen.

Die erfindungsgemäße Vorrichtung kann weiterhin Sensoreinrichtungen aufweisen, welche einen Reinigungszustand der Innenwandung 8 der Blasform 2 kontrollieren. So wäre es beispielsweise möglich, dass in einem geöffneten Zustand eine Bildaufnahmeeinrichtungen die Innenwandung 8 optisch überprüft. Daneben wäre es noch möglich, dass weitere Reinigungseinrichtungen wie beispielsweise Bürsten vorgesehen sind, welche in einem geöffneten Zustand die Innenwandung noch mechanisch säubern. Es jedoch auch möglich, das eine derartige Bürsteneinrichtung in der Längsrichtung L in die Vorrichtung eingeführt wird. Weiterhin wäre es auch möglich, die Innenwandung aufeinanderfolgend mit mehreren Reinigungsmedien zu beaufschlagen.

Anstelle der hier erwähnten üblicherweise flüssigen Reinigungsmedien wäre es jedoch auch möglich, gasförmige oder dampfförmige Reinigungsmedien zu verwenden. Daneben könnten zusätzlich zu den flüssigen Reinigungsmedien auch noch weitere Sterilisationsaggregate vorgesehen sein, wie beispielsweise UV-Strahler oder Elektronenstrahler, welche eine Desinfektion der Innenwandung bewirken.

Weiterhin könnten zusätzliche Düsen oder Öffnungen vorgesehen sein, mittels denen Spülflüssigkeit, wie beispielsweise destilliertes Wasser, auf die Innenwandung 8 der Blasform 2 aufgetragen werden kann. So könnte nach dem eigentlichen Reinigungsgang mit der Reinigungsflüssigkeit noch ein Spülgang vorgesehen sein, der zum Ausspülen der Blasform 2 dient. Dieser Spülgang könnte dabei in einem geschlossenen Zustand der Blasform erfolgen, es wäre jedoch auch möglich, dass die Blasform 2 zunächst geöffnet wird und anschließend im geöffneten Zustand die Innenwandung 8 gespült wird.

Schließlich wäre es auch noch möglich, Reinigungsdüsen an der Innenwandung selbst anzuordnen, so dass eine derartige Reinigungsdüse beispielsweise einen gegenüberliegenden Bereich der Innenwandung 8 besprüht.

Weiterhin können Flüssigkeitsmesseinrichtungen vorgesehen sein, welche die Menge an Reinigungsmedium, mit der die Blasform beaufschlagt wird, ermitteln. Auf diese Weise kann sichergestellt werden, dass für jeden Reinigungsvorgang nur eine vorbestimmte Menge an Reinigungsflüssigkeit aufgebracht wird.

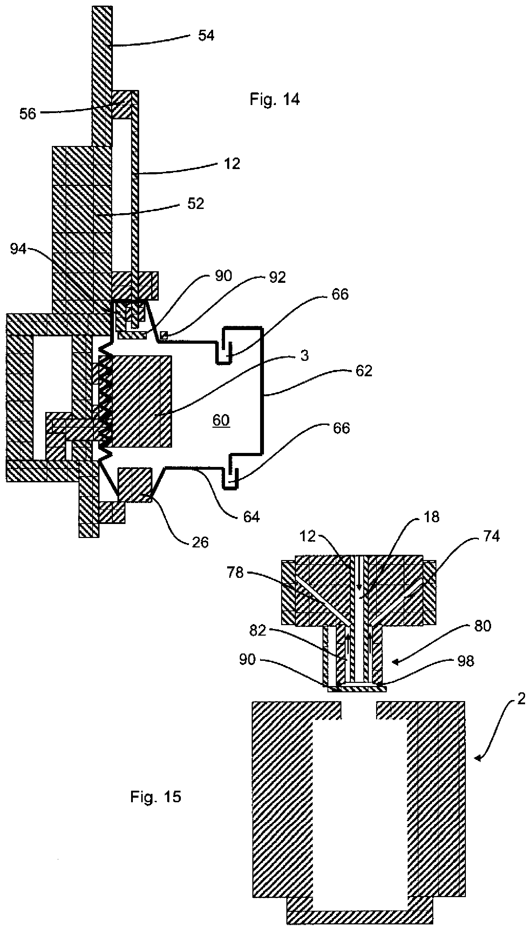

Fig. 14 zeigt eine Blasmaschine einer erfindungsgemäßen Vorrichtung. Bei dieser Anordnung findet der Umformungsvorgang innerhalb eines Sterilraums 60 statt, durch den die einzelnen Blasformen transportiert werden. Dieser Sterilraum wird dabei durch eine Vielzahl von Wandungen 62, 64 eingegrenzt, wobei hier die äußere Wandung 62 stationär angeordnet ist und die innere Wandung 64 sich mit den einzelnen Blasformen bzw. den Blasformträgern mitbewegt. Die Reckstange 12 wird dabei durch eine Wandung des Sterilraums 60 hindurchbewegt. Um hier eine Abdichtung zu erreichen, können beispielsweise Faltenbälge verwendet werden. Das Bezugszeichen 66 kennzeichnet eine Dichtungseinrichtung, um bezüglich einander bewegliche Wandungen 62, 64 des Sterilraums 60 gegeneinander abzudichten. Bei dieser Dichtungseinrichtung 66 kann es sich beispielsweise um ein sog. Wasserschloss handeln

Das Bezugszeichen 90 bezieht sich auf eine Abdeckeinrichtung, welche zum Abdichten der Blasdüse während eines Reinigungsvorgangs verwendet werden kann. Diese Abdichteinrichtung kann dabei mittels eines magnetischen Elements 92, welches sich hier ausserhalb des Sterilraums 60 befindet, an die Blasdüse angelegt werden. Es wäre jedoch auch möglich, die Abdeckeinrichtung mit anderen Elementen wie etwa Servomotoren, pneumatischen oder hydraulischen Antrieben zuzustellen.

Das Bezugszeichen 52 kennzeichnet einen Träger, an dem eine Antriebseinrichtung 54 zum Bewegen der Reckstange 12 mittels eines Schlittens 56 angeordnet ist.

Fig. 15 veranschaulicht einen Reinigungsvorgang zum Reinigen der Blasdüse 80, bzw. für einen CIP - Vorgangs (cleaning in place). Hierzu wird ein Reinigungs- bzw. Sterilisationsmedium vorteilhaft kontinuierlich in den Kanal 18 der Reckstange 12 eingeführt und gelangt von dort zu der Blasdüse 80, welche während des Reinigungsvorgangs mit der Abdeckeinrichtung 90 (sog. CIP - Kappe) abgedeckt ist um diese Blasdüse 80 zu reinigen. Das Bezugszeichen 98 kennzeichnet eine Abdichteinrichtung, um den Bereich zwischen der Blasdüse und der Abdeckeinrichtung in einem abgedeckten Zustand der Blasdüse abzudichten.

Anschließend wird das Reinigungsmedium über eine Rückführleitung 82, 74 wird zurückgeführt. Zusätzlich wäre es auch möglich, die Blasluft, welche im Arbeitsbetrieb zum Expandieren der Behältnisse verwendet wird, während der Reinigung zum vorantreiben des Reinigungsmediums zu verwenden.

Zusätzlich wäre es möglich, im Rahmen einer Reinigung der Blasdüse auch eine Reinigung des Ventilblocks, der die Zufuhr der Blasluft an die Kunststoffvorformlinge steuert, durchzuführen. Auch zur Durchführung dieser Reinigung kann die Abdeckeinrichtung 90 an der Blasdüse anliegen. So können die Rückführleitungen 82, 74 während des Arbeitsbetriebs der Maschine auch zum Zuführen der Blasluft zum Expandieren der Kunststoffvorformlinge dienen.

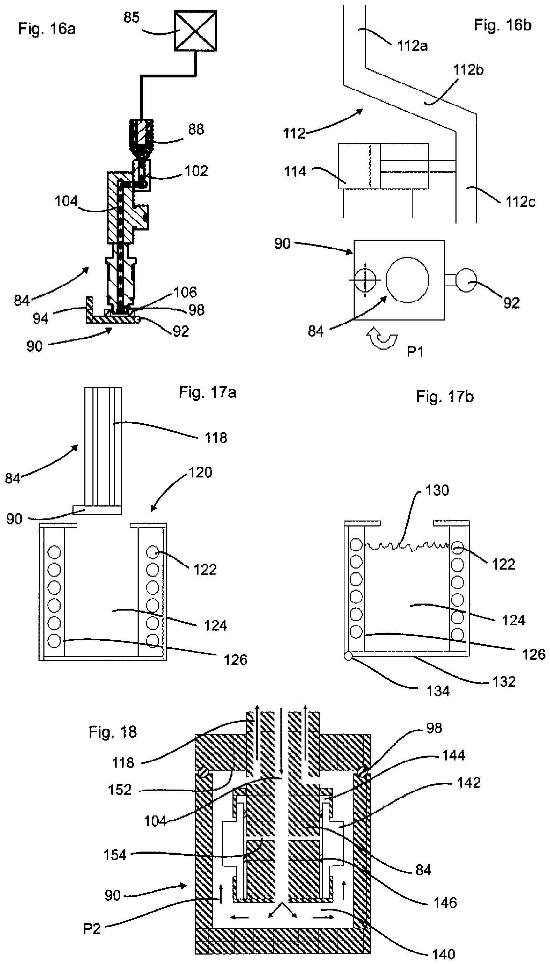

Die Figuren 16a und 16b zeigen eine weitere Ausführungsform der vorliegenden Vorrichtung, hier jedoch in der Anwendung für eine Heizeinrichtung zum Erwärmen der Kunststoffvorformlinge. Hier ist noch eine Abdeckeinrichtung 90 wie etwa eine sog. CIP - Kappe vorgesehen, welche unterhalb des Halteelements 84 angeordnet ist. Diese Abdeckeinrichtung ist bei dieser Ausführungsform schwenkbar gegenüber dem Halteelement 84 angeordnet. So ist es möglich, dass diese Abdeckeinrichtungen 90 schwenkbar an einer Ofenkette (nicht gezeigt) mitfahrend gelagert sind. Denkbar wäre auch, dass die CIP - Kappen 90 nicht jedem Halteelement 84 zugeordnet sind, sondern stationär angeordnet sind, um ein taktweises Reinigen der Halteelemente 84 zu ermöglichen. Auch ein zeitweises Begleiten der Halteelemente 84 von den CIP - Kappen 90 wäre denkbar. Auf diese Weise wäre auch ein kontinuierlicher Reinigungsvorgang an der Begleitstrecke möglich.

Vorteilhaft ist daher an wenigstens einem Halteelement 84 eine Abdeckeinrichtung 90 angeordnet, wobei eine Reinigungsflüssigkeit wenigstens abschnittsweise über diese Abdeckeinrichtung 90 führbar ist.

Das Bezugszeichen 112 in Fig. 16b kennzeichnet entsprechend eine stationär angeordnete Führungskurve, mit der eine Laufrolle 92, welche an der Abdeckeinrichtung 90 angeordnet ist, bewegt werden kann, um die Abdeckeinrichtung (in Fig. 16b in der Figurenebene) zu schwenken. Diese Führungskurve ist dabei zusätzlich mittels einer Antriebseinrichtung wie hier eines Pneumatikzylinders 114 schwenkbar oder ausfahrbar. Dabei ist es möglich, dass ein zweites Kurvensegment 112c gegenüber einem ersten Kurvensegment 112a verschoben werden kann, um die Führungskurve 112 zu verstellen. Das Bezugszeichen 112b bezieht sich auf ein entsprechendes Übergangssegment. Durch die in Fig. 16b schematisch dargestellte Anpassung der Kurve 112 kann ein Schwenkvorgang der Abdeckeinrichtung erreicht werden. Genau so ist es aber auch möglich, die Kurvensegmente 112a, 112b und 112c gemeinsam zuzustellen bzw. zu verfahren.

Das Bezugszeichen 94 in Fig. 16a kennzeichnet eine Anlenkung wie eine Schwenkwelle, um die die Abdeckeinrichtung 90 schwenkbar ist. Das Bezugszeichen 98 kennzeichnet eine Abdichteinrichtung, um das Halteelement (insbesondere während eines Spülvorgangs abzudichten.

Zu Reinigungszwecken läuft ein Reinigungs- oder Sterilsationsmedium hierbei (bevorzugt kontinuierlich) über eine Drehverteilung im Ofen durch den Heizdorn und / oder die Abschirmplatte hindurch und wird von der CIP-Kappe über eine nicht dargestellte Rückführleitung wieder rückgeführt. Denkbar wären auch Servozustellungen für die Kappen.

Bevorzugt werden die Heizdorne auf diese Weise auf einem Rundläuferofen (beispielsweise STIR (selektives transformiertres Infrarot) oder Mikrowelle) sterilisiert. Hier hätte man auch eine leichtere Drehverteilung. Es wäre auch denkbar auf diese Weise die einem oder mehreren Preform zugeordneten Heizkavitäten, also zum Beispiel die Resonatoren oder Heiztaschen zu reinigen/sterilisieren.

Die Fig. 17a und 17b zeigen eine weitere Ausführungsform der vorliegenden Vorrichtung. Hier sind sog. Heizaufnahmen 120 bzw. Heiztaschen vorgesehen, in denen die Kunststoffvorformlinge während des Arbeitsbetriebs erwärmt werden. Diese Heizaufnahmen bewegen sich dabei mit den Kunststoffvorformlingen mit. Damit fungieren diese Heizaufnahmen 120 als die Vorformlinge umgebende Bestrahlungskammern. Diese Heizaufnahmen können dabei karusselförmig angeordnet sein. Die Bezugszeichen 122 beziehen sich auf Infrarotstrahler, welche die in dem Aufnahmeraum 124 angeordneten Kunststoffvorformlinge erwärmen.

Eine Innenwand der Heizaufnahmen 120 kann dabei als keramischer Infrarotstrahler ausgebildet sein. Daneben ist es möglich, dass ein stabförmiger Infrarotstrahler (nicht gezeigt) in die Kunststoffvorformlinge eingeführt wird um diese zu erwärmen. Vorteilhaft ist dabei der Kunststoffvorformling vollständig (ggfs. bis auf seine Mündung) innerhalb der Heizaufnahme angeordnet. Das Halteelement 84 bzw. der Heizdorn muss selbst jedoch nicht als IR- Strahler ausgebildet sein, sondern etwa nur reflektieren oder den Kunststoffvorformling halten.

Das Bezugszeichen 126 kennzeichnet eine Schutzscheibe für die IR - Strahler.

Fig. 17b zeigt die Heizaufnahme 120 in einem Reinigungsbetrieb. Hier wird diese Heizaufnahme durch Anfüllen mit einem Sterilisationsmedium 130 sterilisiert. Genauer können hier auch die Heizstrahler 122 und die Reflektoren gereinigt werden. Das Bezugszeichen 132 bezieht sich auf einen Boden der Heizaufnahme, der hier auch einen Auslass für das Sterilisationsmedium 130 bildet. Zum Öffnen kann der Boden um eine Schwenkachse 134 geschwenkt werden. In Fig. 17a ist zusätzlich auch ein Rückleitungskanal 118 erkennbar, der zum Rückführen des Sterilisationsmediums dient. Die Heizaufnahme 120 kann insbesondere durch den Halteelement 84 selbst befüllt werden. Somit ist eine eigene Abdeckeinrichtung 90 für den Dorn 84 nicht zwingend nötig. Auf diese Weise ist auch ein Eintauchen eines Halteelements 84 zur Reinigung oder Sterilisation der Außenflächen möglich. In anderen Worten könnte so die Heizaufnahme 120 die Funktion der Abdeckeinrichtung 90 übernehmen.

Fig. 18 zeigt eine weitere Darstellung zur Veranschaulichung eines Sterilisationsvorgangs. Über den Kanal 104 wird das Reinigungsmedium in einen von der Abdeckeinrichtung 90 ausgebildeten Aufnahmeraum 140 geleitet. Von dort strömt das Reinigungsmedium wieder nach oben (Pfeil P2) und über den Rückleitungskanal 118 zurück. Zu diesem Zweck wird die Abdeckeinrichtung 90 an einen Anschlag 152 angedrückt, wobei dieser Anschlag im Arbeitsbetrieb der Anlage auch als Anschlag für die Kunststoffvorformlinge dienen kann.

Das Bezugszeichen 142 bezieht sich auf eine Greiferbacke, welche zum Halten der Kunststoffvorformlinge dient. Auch diese Greiferbacken 142 können mit gereinigt werden. Zu diesem Zeck weist das Halteelement einen Teilkanal 154 auf, welcher zum Hinterspülen der Greiferbacken 142 dient. Das Bezugszeichen 98 bezieht sich wieder auf Dichtungseinrichtungen zum Abdichten der Abdeckeinrichtung 90 gegenüber dem Halteelement während des Spülvorgangs. Mittels einer Federungseinrichtung 146 (bei der es sich aber auch um einen elastischen O-Ring handeln kann), wird die Greiferbacke 142 nach aussen vorgespannt. Das Bezugszeichen 144 kennzeichnet einen Halteraum zum Halten der Greiferbacken 142. In anderen Worten wird das Halteelement 84 sowohl von innen als auch von außen gereinigt bzw. sterilisiert.

Die in den Figueren 16 bis 18 gezeigten Abdeckelemente 90 könnten auch zumindest teilweise aus einem reflektierendem Material ausgebildet sein, um während eines Normalbetriebs der Vorrichtung Strahlung, insbesondere auf den Vorformling, zu reflektieren.

Die Reinigungs- oder Sterilisiationsflüssigkeit kann auch zur Kühlung einzelner Elemente wie der Heizdorne im Normalbetrieb Verwendung finden.

Daneben wird darauf hingewiesen, dass die vorliegende Vorrichtung auch für solche Maschinen Anwendung finden kann, welche die Kunststoffvorformlinge in deren Umfangsrichtung ungleichmäßig erwärmen (preferential heating). Eine derartige Vorrichtung wurde beispielsweise in der Deutschen Patentanmeldung Nr. 10 2009 021 792.4 dargestellt. Der Offenbarungsgehalt dieser Anmeldung wird hiermit durch Bezugnahme vollumfänglich auch zum Offenbarungsgehalt der vorliegenden Anmeldung gemacht.

Hierbei könnten beispielsweise Klammern gereinigt werden, welche die Kunststoffvorformlinge berühren, um so ein ungleichmäßiges Temperaturprofil auf diese aufzubringen. Die Reinigung könnte hier über Bürsten oder auch über einen CIP - Modus vorgenommen werden.

Daneben könnte auch eine Reinigung eines Sterilisationsmoduls wie in der PCT/EP2009/059923 beschrieben, vorgenommen werden. Der Offenbarungsgehalt auch dieser Anmeldung wird hiermit durch Bezugnahme vollumfänglich auch zum Offenbarungsgehalt der vorliegenden Anmeldung gemacht.

Die Halteelemente 84 dienen dabei dazu, um die Kunststoffvorformlinge während deren Transport durch die Heizeinrichtung zu halten. Bei den gezeigten Ausführungsformen greifen die Halteelemente in die Mündungen der zu transportierenden Kunststoffvorformlinge.

Daneben wäre es auch möglich, solche Heizmodule, welche die Kunststoffvorformlinge in deren Umfangsrichtung ungleichmäßig erwärmen (preferential heating) ähnlich wie in der hier vorgeschlagenen Weise zu behandeln. So könnte beispielsweise ein Reinigungsmittel über eine einführbare Stange eingeführt werden oder aber auch über einen Automaten von aussen. Auch ein Sterilisationsmodul zum Sterilisieren der Behältnisse könnte in dieser Weise gereinigt werden, d.h. ein Reinigungsmittel über eine einführbare Stange eingeführt werden oder aber auch über einen Automaten von aussen.

Weiterhin wäre es auch möglich, die in den einzelnen Figuren gezeigten Merkmale miteinander zu kombinieren, als beispielsweise Merkmale, welche sich auf die Heizeinrichtung gem. Fig. 16a- 18 beziehen, auch auf die Blasformmaschine anzuwenden oder umgekehrt.

### Bezugszeichenliste

- 1: Vorrichtung
- 2: Blasform
- 3: Blasformträger
- 4: Hohlraum
- 8: Innenwandung
- 10: Reinigungseinrichtung
- 11: Hauptträger
- 12: Reckstange
- 14: Austrittsöffnung

- 18: Kanal
- 19: Teilkanäle
- 21: Kanäle
- 22, 24: Blasformhälfte, schwenkbare Seitenteile
- 23: Kanal
- 25: Austrittsöffnung, Reinigungsdüse
- 26: Bodenteil
- 27: Wandung
- 29: Öffnung
- 29a: Zuführleitung
- 32: Abführöffnung
- 36: Endabschnitt
- 37: Kanal
- 38: Vorlauf
- 39: Rücklauf
- 42, 44: Zuführleitung
- 46: Ventilblock
- 52: Träger
- 54: Antriebseinrichtung
- 56: Schlitten
- 60: Sterilraum
- 62: Wandung
- 64: Wandung
- 74: Rückführleitung
- 80: Blasdüse
- 82: Rückführleitung
- 84: Halteelement
- 86: Reservoir
- 87: Rücklauf
- 88: Düse
- 89: Zulauf
- 90: Abdeckeinrichtung
- 92: Laufrolle
- 94: Anlenkung
- 98: Abdichteinrichtung
- 102: Lagerklotz
- 104: Kanal
- 106: Kanäle
- 108: Rolle
- 112: Führungskurve
- 112a-c: Segmente der Führungskurve
- 114: Pneumatikzylinder
- 118: Rückleitungskanal
- 120: Heizaufnahme
- 122: Infrarotstrahler
- 124: Aufnahmeraum
- 126: Schutzscheibe
- 130: Sterilisationsmedium
- 132: Boden der Heizaufnahme 120
- 134: Schwenkachse
- 140: Aufnahmeraum
- 142: Greiferbacke
- 144: Halteraum
- 146: Federungseinrichtung
- 152: Anschlag
- 154: Teilkanal

- P1: Pfeil
- L: Längsrichtung

## Patentansprüche

1. Vorrichtung (1) zum Umformen von Kunststoffvorformlingen zu Behältnissen, mit Blasformen (2), wobei jede Blasform einen Hohlraum (4) ausbildet, innerhalb dessen die Kunststoffvorformlinge zu Behältnissen umformbar sind, mit einem Druckbeaufschlagungseinrichtung, um die Kunststoffvorformlinge mit einem Medium zu beaufschlagen, um diese gegen eine den Hohlraum (4) begrenzende Innenwandung (8) der jeweiligen Blasform zu expandieren, mit einer Reckstange (12), um die Kunststoffvorformlinge in deren Längsrichtung (L) zu dehnen, wobei die Vorrichtung eine Reinigungseinrichtung (10) aufweist, um Bereiche der jeweiligen Blasform (2) zu reinigen, wobei die Reinigungseinrichtung (10) wenigstens eine Austrittsöffnung (14) für ein Reinigungsmedium zum Reinigen der jeweiligen Blasform aufweist und diese Austrittsöffnung wenigstens zeitweise innerhalb der jeweiligen Blasform (2) angeordnet ist, wobei wenigstens eine Austrittsöffnung (14) in der Reckstange (12), und/oder der Druckbeaufschlagungseinrichtung angeordnet ist, wobei der Umformungsvorgang innerhalb eines Sterilraums (60) stattfindet, durch welchen die einzelnen Blasformen (2) transportiert werden , wobei der Sterilraum (60) dabei durch eine Vielzahl von Wandungen (62, 64) eingegrenzt wird, wobei die Reckstange (12) durch eine Wandung des Sterilraums (60) hindurchbewegt wird, und wobei mittels einer Dichtungseinrichtung (66) die bezüglich einander beweglichen Wandungen (62, 64) des Sterilraums (60) gegeneinander abgedichtet sind.

2. Vorrichtung nach Anspruch 1,
**dadurch gekennzeichnet, dass**
die Austrittsöffnung (14) als Düse für das Reinigungsmedium ausgebildet ist.

3. Vorrichtung nach wenigstens einem der vorangegangenen Ansprüche,
**dadurch gekennzeichnet, dass**
die Blasform (2) zwei auseinanderschwenkbare Seitenteile (22, 24) aufweist, die in einem geschlossenen Zustand in ihrem Inneren den Hohlraum (4) ausbilden.

4. Vorrichtung nach wenigstens einem der vorangegangenen Ansprüche,
**dadurch gekennzeichnet, dass**
die Blasform (2) ein Bodenteil (26) aufweist.

5. Vorrichtung nach wenigstens einem der vorangegangenen Ansprüche,
**dadurch gekennzeichnet, dass**
wenigstens eine Austrittsöffnung in einem Bodenteil der Blasform (2) angeordnet ist.

6. Vorrichtung nach Anspruch 5,
**dadurch gekennzeichnet, dass**
die Reckstange (12) einen in eine Richtung eines Bodens der Behältnisse weisenden Endabschnitt (36) aufweist und die Austrittsöffnung in diesem Endabschnitt angeordnet ist.

7. Vorrichtung nach Anspruch 5,
**dadurch gekennzeichnet, dass**
die Austrittsöffnung in einem zentralen Bereich eines Bodenteils (26) der Blasform (2) angeordnet ist.

8. Vorrichtung nach wenigstens einem der vorangegangenen Ansprüche,
**dadurch gekennzeichnet, dass**
die Blasform Abführöffnungen (32) zum Abführen des Reinigungsmediums aufweist.

9. Vorrichtung nach Anspruch 8, **dadurch gekennzeichnet, dass**
die Abführöffnungen (32) in einem Bodenteil (26) der Blasform (2) vorgesehen sind.

10. Vorrichtung nach wenigstens einem der vorangegangenen Ansprüche,
**dadurch gekennzeichnet, dass**
die Blasform beweglich angeordnet ist.

11. Anordnung zum Umformen von Kunststoffvorformlingen zu Kunststoffbehältnissen mit einer Vielzahl von Vorrichtungen nach wenigstens einem der vorangegangenen Ansprüche, wobei die Vorrichtungen an einer gemeinsamen Transporteinrichtung angeordnet sind.

12. Verfahren zum Umformen von Kunststoffvorformlingen zu Kunststoffbehältnissen, mit Blasformen (2), wobei die Kunststoffvorformlinge innerhalb eines Hohlraums durch Beaufschlagung mit einem Medium zu Kunststoffvorformlingen expandiert werden und wobei dieser Hohlraum durch wenigstens jeder Innenwandung einer Blasform ausgebildet wird, und die jeweilige Blasform (2) von einem geöffneten Zustand in einen geschlossenen Zustand überführbar ist, wobei ein Reinigungsbetrieb vorgesehen ist, bei welchem innerhalb der jeweiligen Blasform kein Kunststoffbehältnis aufgenommen ist und wenigstens ein Bereich der jeweiligen Blasform (2) durch Beaufschlagung mit einem Reinigungsmedium sterilisiert wird, wobei die Beaufschlagung mit dem Medium in einem geschlossenen Zustand der jeweiligen Blasform (2) durchführbar ist, wobei der Umformungsvorgang innerhalb eines Sterilraums (60) stattfindet, durch welchen die einzelnen Blasformen (2) transportiert werden , wobei der Sterilraum (60) dabei durch eine Vielzahl von Wandungen (62, 64) eingegrenzt wird, wobei die Reckstange (12) durch eine Wandung des Sterilraums (60) hindurchbewegt wird, und wobei mittels einer Dichtungseinrichtung (66) die bezüglich einander beweglichen Wandungen (62, 64) des Sterilraums (60) gegeneinander abgedichtet sind.

13. Verfahren nach Anspruch 12,
**dadurch gekennzeichnet, dass**
das Reinigungsmedium durch einen Bodenbereich der Blasform (2), durch die Reckstange (12) und/oder durch eine Blasdüse in den Hohlraum eingebracht wird.

## Claims

1. Apparatus (1) for transforming plastic preforms into containers, comprising blow moulds (2), wherein each blow mould forms a cavity (4), inside which the plastic preforms can be transformed into containers, comprising a pressure application device for applying a medium to the plastic preforms in order to expand the latter against an inner wall (8) of the respective blow mould delimiting the cavity (4), comprising a stretching rod (12) for stretching the plastic preforms in the longitudinal direction (L) thereof, wherein the apparatus comprises a cleaning device (10) for cleaning regions of the respective blow mould (2), wherein the cleaning device (10) comprises at least one outlet opening (14) for a cleaning medium for cleaning the respective blow mould, and this outlet opening is arranged at least at times inside the respective blow mould (2), wherein at least one outlet opening (14) is arranged in the stretching rod (12), and/or the pressure application device, wherein the transforming process takes place within a sterile room (60), through which the individual blow moulds (2) are transported, wherein the sterile room (60) is here delimited by a plurality of walls (62, 64), wherein the stretching rod (12) is moved through a wall of the sterile room (60), and wherein by means of a sealing device (66) the walls (62, 64) of the sterile room (60) being moveable relative to each other are sealed relative to each other.

2. Apparatus according to claim 1,
**characterised in that**
the outlet opening (14) is designed as a nozzle for the cleaning medium.

3. Apparatus according to at least one of the preceding claims,
**characterised in that**
the blow mould (2) has two side parts (22, 24) which can be pivoted away from one another and which in a closed state form the cavity (4) in their interior.

4. Apparatus according to at least one of the preceding claims,
**characterised in that**
the blow mould (2) has a bottom part (26).

5. Apparatus according to at least one of the preceding claims,
**characterised in that**
at least one outlet opening is arranged in a bottom part of the blow mould (2).

6. Apparatus according to claim 5,
**characterised in that**
the stretching rod (12) has an end section (36) pointing in a direction of a bottom of the containers and the outlet opening is arranged in this end section.

7. Apparatus according to claim 5,
**characterised in that**
the outlet opening is arranged in a central region of a bottom part (26) of the blow mould (2).

8. Apparatus according to at least one of the preceding claims,
**characterised in that**
the blow mould has discharge openings (32) for discharging the cleaning medium.

9. Apparatus according to claim 8,
**characterised in that**
the discharge openings (32) are provided in a bottom part (26) of the blow mould (2).

10. Apparatus according to at least one of the preceding claims,
**characterised in that**
the blow mould is arranged in a movable manner.

11. Arrangement for transforming plastic preforms into plastic containers, comprising a plurality of apparatuses according to at least one of the preceding claims, wherein the apparatuses are arranged on a common transport device.

12. Method for transforming plastic preforms into plastic containers with blow moulds (2), wherein the plastic preforms are expanded inside a cavity through the application of a medium to form plastic preforms, and wherein this cavity is formed by at least each inner wall of a blow mould, and the respective blow mould (2) can be transferred from an open state to a closed state, wherein a cleaning mode is provided, in which no plastic container is accommodated inside the respective blow mould and at least one region of the respective blow mould (2) is sterilised by the application of a cleaning medium,
wherein the application of the medium can be carried out in a closed state of the respective blow mould (2), wherein the transforming process takes place inside a sterile room (60), through which the individual blow moulds (2) are transported, wherein the sterile room (60) is delimited by a plurality of walls (62, 64), wherein the stretching rod (12) is moved through a wall of the sterile room (60), and wherein by means of a sealing device (66) the walls (62, 64) of the sterile room (60) being moveable relative to each other are sealed relative to each other.

13. Method according to claim 12,
**characterised in that**
the cleaning medium is introduced into the cavity through a bottom region of the blow mould (2), through the stretching rod (12) and/or through a blowing nozzle.

## Revendications

1. Dispositif (1) pour façonner des préformes en matière plastique en récipients, avec des moules de soufflage (2), chaque moule de soufflage formant une cavité (4) dans laquelle les préformes en matière plastique peuvent être transformées en récipients, avec un dispositif de pressurisation pour solliciter les préformes en matière plastique avec un milieu afin de l'expanser contre une paroi intérieure (8) délimitant la cavité (4) du moule de soufflage respectif, avec une tige d'étirage (12) pour étirer les préformes en matière plastique dans leur direction longitudinale (L), le dispositif présentant un dispositif de nettoyage (10) pour nettoyer les zones du moule de soufflage (2) respectif, le dispositif de nettoyage (10) présentant au moins une ouverture de sortie (14) pour un milieu nettoyant pour nettoyer le moule de soufflage respectif et l'ouverture de sortie étant disposée au moins temporairement à l'intérieur du moule de soufflage (2) respectif, au moins une ouverture de sortie (14) étant disposée dans la tige d'étirage (12) et/ou le dispositif de pressurisation, le processus de transformation se déroulant dans une chambre stérile (60) à travers laquelle les moules de soufflage (2) individuels sont transportés, la chambre stérile (60) étant délimitée par une pluralité de parois (62, 64), la tige d'étirage (12) étant déplacée à travers une paroi de la chambre stérile (60), et les parois (62, 64) mobiles l'une par rapport à l'autre de la chambre stérile (60) étant isolées les unes des autres au moyen d'un dispositif d'étanchéité (66).

2. Dispositif selon la revendication 1,
**caractérisé en ce que**
l'ouverture de sortie (14) est conçue comme une buse pour le milieu nettoyant.

3. Dispositif selon au moins l'une des revendications précédentes,
**caractérisé en ce que**
le moule de soufflage (2) présente deux parties latérales (22, 24) pivotantes formant dans un état fermé la cavité (4) en leur sein.

4. Dispositif selon au moins l'une des revendications précédentes,
**caractérisé en ce que**
le moule de soufflage (2) présente une partie de fond (26).

5. Dispositif selon au moins l'une des revendications précédentes,
**caractérisé en ce que**
au moins une ouverture de sortie est disposée dans une partie de fond du moule de soufflage (2).

6. Dispositif selon la revendication 5,
**caractérisé en ce que**
la tige d'étirage (12) présente une section d'extrémité (36) pointant en direction du fond des récipients et l'ouverture de sortie est disposée dans cette section d'extrémité.

7. Dispositif selon la revendication 5,
**caractérisé en ce que**
l'ouverture de sortie est disposée dans une région centrale d'une partie de fond (26) du moule de soufflage (2).

8. Dispositif selon au moins l'une des revendications précédentes,
**caractérisé en ce que**
le moule de soufflage présente des ouvertures d'évacuation (32) pour évacuer le milieu nettoyant.

9. Dispositif selon la revendication 8,
**caractérisé en ce que**
les ouvertures d'évacuation (32) sont prévues dans une partie de fond (26) du moule de soufflage (2).

10. Dispositif selon au moins l'une des revendications précédentes,
**caractérisé en ce que**
le moule de soufflage est agencé de manière mobile.

11. Système pour façonner des préformes en matière plastique en récipients en matière plastique avec une pluralité de dispositifs selon au moins l'une des revendications précédentes, les dispositifs étant disposés sur un dispositif de transport commun.

12. Procédé pour façonner des préformes en matière plastique en récipients en matière plastique, avec des moules de soufflage (2), les préformes en plastique étant expansées en préformes en plastique dans une cavité par sollicitation avec un milieu et la cavité étant formée par au moins chaque paroi intérieure d'un moule de soufflage, et le moule de soufflage (2) respectif pouvant passer d'un état ouvert à un état fermé, une opération de nettoyage étant prévue durant laquelle aucun récipient en plastique n'est reçu par le moule de soufflage respectif et au moins une partie du moule de soufflage (2) respectif est stérilisée par sollicitation avec un milieu nettoyant, la sollicitation avec le milieu pouvant être réalisée dans un état fermé du moule de soufflage (2) respectif, le processus de transformation se déroulant dans une chambre stérile (60) à travers laquelle les moules de soufflage individuels (2) sont transportés, la chambre stérile (60) étant délimitée par une pluralité de parois (62, 64), la tige d'étirage (12) étant déplacée à travers une paroi de la chambre stérile (60), et les parois (62, 64) mobiles l'une par rapport à l'autre de la chambre stérile (60) étant isolées les unes des autres au moyen d'un dispositif d'étanchéité (66).

13. Procédé selon la revendication 12,
**caractérisé en ce que**
le milieu nettoyant est introduit dans la cavité à travers une zone inférieure du moule de soufflage (2), à travers la tige d'étirage (12) et/ou à travers une buse de soufflage.
